# EUROPEAN PATENT APPLICATION

(11) **EP 2 784 581 A1**
(43) Date of publication of application: **01.10.2014**
(21) Application number: 14156835.2
(22) Date of filing: 26.02.2014
(51) Int. Cl.: G03B 21/20

(54) **Projector and head-up display device and a light dimming control method**

(30) Priority: 29.03.2013 JP 2013070748
(71) Applicant: Funai Electric Co., Ltd., Daito city Osaka 574-0013 (JP)
(72) Inventor: Tani, Kazuhiko, Osaka 574-0013 (JP)
(74) Representative: Osha Liang SARL

(57) **Abstract**

A projector (100) comprises a first dimming control (24) that adjusts brightness of a projected light and a second dimming control (28) that adjusts the brightness of the projected light (1) separately from the first dimming control (24). When the brightness of the projected light (1) is adjusted by combining the first dimming control (24) and the second dimming control (28), one of the first dimming control (24) or the second dimming control (28) controls a direction of decreasing the brightness of the projected light (1) before the other of the first dimming control (24) or the second dimming control (28) controls a direction of increasing the brightness of the projected light (1).

## Description

### [Technical Field]

The present invention relates generally to a projector, such as for example a head-up display device, and in particular, a projector comprising a plurality of dimming controls that adjust the brightness of projected light.

### [Background Art]

In the past, projectors having a plurality of dimming controls that adjust the brightness of projected light were known (for example, refer to Patent Reference 1).

Patent Reference 1 discloses a projector comprising a light emitting element (light generator), a dimmer panel (neutral density filter) that changes the amount of transmitted light of illumination light irradiated by the light emitting element, and a dimmer panel drive motor that rotates and drives the dimmer panel. In the projector described in Patent Reference 1, the dimmer panel is formed by a transparent part and an opaque part and a neutral density filter region having a predetermined dimming rate formed in a state where they are connected in a ring shape (annular shape). Also, dimming control of the projected light output from the projector is performed by combining light intensity control of the illumination light of the light emitting element and rotation position control of the dimmer panel by the dimmer panel drive motor.

[Patent Reference 1] Japanese Unexamined Patent Application Publication No. 2008-225440

In the aforementioned projector described in Patent Reference 1, it is disclosed that dimming control of the projected light output from the projector is performed by combining light intensity control of the illumination light of the light emitting element and rotation position control of the dimmer panel by the dimmer panel drive motor, but on the other hand, detailed contents regarding dimming control by the light-generating element and dimmer panel are neither disclosed nor suggested. Here, when dimming control is performed by combining control that increases or decreases the light intensity of the light emitting element and control that increases or decreases the amount of transmitted light that passes through the dimmer panel, if the types of control are performed with a time lag, in the course of the brightness of the projected light being transitioned from the state before the change to the state after the change, a phenomenon may occur wherein the brightness of the projected light temporarily (momentarily) becomes brighter than the state before the change and then transitions to the state after the change.

### [Summary of the Invention]

One or more embodiments of the present invention are directed to a projector, such as for example a head-up display device, that can avoid a momentary increase in brightness of projected light when dimming control is performed using a plurality of dimming controls.

A projector according to one or more embodiments may comprise a first dimming control that adjusts brightness of a projected light; and a second dimming control that adjusts the brightness of the projected light separately from the first dimming control, wherein, when the brightness of the projected light is adjusted by combining the first dimming control and the second dimming control, one of the first dimming control or the second dimming control controls a direction of decreasing the brightness of the projected light before the other of the first dimming control or the second dimming control controls a direction of increasing the brightness of the projected light.

As a result, according to one or more embodiments, in the course of the brightness of projected light being transitioned from the state before the change to the state after the change, by control, the brightness of the projected light is decreased using one dimming control and then the brightness of the projected light is increased using the other dimming control. Therefore, it is possible to avoid the situation where the brightness of the projected light transitions from the state before the change to the state after the change after temporarily (momentarily) becoming bright. As a result, when dimming control of projected light is performed using a plurality of dimming controls, it is possible to avoid a momentary increase in brightness of projected light.

According to one or more embodiments, the first dimming control may be a light generator that adjusts light intensity of the projected light. According to one or more embodiments, the second dimming control may be a neutral density filter that adjusts an amount of transmitted light of the projected light. For example, when the brightness of the projected light is adjusted by combining the light generator and the neutral density filter, the light generator may decrease the light intensity of the projected light before the neutral density filter increases the amount of transmitted light, or the neutral density filter may decrease the amount of transmitted light of the projected light before the light generator increases the light intensity of the projected light. If configured in this manner, for example, in the course of the brightness of projected light being transitioned from the state before the change to the state after the change, by control, the amount of transmitted light by the neutral density filter is increased after the light intensity of the projected light by the light generator is decreased, or the light intensity of the projected light by the light generator is increased after the amount of transmitted light by the neutral density filter is decreased. Therefore, it is possible to avoid the situation where the brightness of the projected light transitions from the state before the change to the state after the change after temporarily (momentarily) becoming bright. As a result, when dimming control of projected light is performed using a light generator and a neutral density filter, it is possible to avoid a momentary increase in brightness of projected light.

As another example, in one or more embodiments, when the brightness of the projected light is changed from a first state to a second state that is darker than the first state by combining the light generator and the neutral density filter, the neutral density filter may decrease the amount of transmitted light before the light generator increases the light intensity of the projected light. In this manner, when the brightness of the projected light is adjusted by combining control that decreases the amount of transmitted light by the neutral density filter and control that increases the light intensity of the projected light by the light generator, by performing control that decreases the amount of transmitted light first, the phenomenon of the brightness of projected light becoming temporarily (momentarily) brighter than the brightness of the projected light before the change in the period between the state of projected light before the change and the state of projected light after the change is not induced. Therefore, loss of comfort when the user views (looks at) the projected image projected by the projector can be effectively avoided.

As another example, in one or more embodiments, when the brightness of the projected light is changed from a first state to a third state that is brighter than the first state by combining the light generator and the neutral density filter, the light generator may decrease the light intensity of the projected light before the neutral density filter increases the amount of transmitted light. In this manner, when the brightness of projected light is adjusted by combining control that increases the amount of transmitted light by a neutral density filter and control that decreases light intensity of projected light by a light generator, by performing control that decreases light intensity first, the phenomenon of the brightness of projected light becoming temporarily (momentarily) brighter than the brightness of the projected light before the change in the period between the state of projected light before the change and the state of projected light after the change is not induced. Therefore, loss of comfort when the user views (looks at) the projected image projected by the projector can be effectively avoided.

As another example, in one or more embodiments, the neutral density filter may comprise a plurality of filters and is configured so as to adjust the amount of transmitted light by changing a combination of the plurality of filters for decreasing the amount of transmitted light, and when the neutral density filter decreases the amount of transmitted light before the light generator increases the light intensity of the projected light, the light generator may increase the light intensity of the projected light after the neutral density filter decreases the amount of transmitted light by changing the combination of the plurality of filters. If configured in this manner, even if the projector is configured such that the amount of transmitted light is finely adjusted using a plurality of neutral density filters, it is possible to increase the light intensity of the projected light by the light generator after assuredly decreasing the amount of transmitted light by changing the combination of neutral density filters. Therefore, it is possible to assuredly avoid the situation where the brightness of the projected light transitions from the state before the change to the state after the change after temporarily (momentarily) becoming bright.

As another example, in one or more embodiments, the light generator may be configured so as to adjust the light intensity of the projected light emitted from the light generator by electrically changing power, the neutral density filter may be configured so as to adjust the amount of transmitted light by mechanically moving each of the plurality of filters individually in the direction that traverses the light path of the projected light, and the light generator and the neutral density filter are configured such that, when the neutral density filter decreases the amount of transmitted light before the light generator increases the light intensity of the projected light, the light generator increases light intensity of the projected light by electrically changing the power of the light generator after the neutral density filter completes mechanically moving the plurality of filters. If configured in this manner, light intensity of the projected light by the light generator can be increased by electrical power control after the amount of transmitted light that passes through the neutral density filter has been assuredly decreased by assuredly completing dimming control of the neutral density filter accompanying the mechanical movement operation. Therefore, it is possible to assuredly avoid the situation where the brightness of the projected light transitions from the state before the change to the state after the change after temporarily (momentarily) becoming bright.

As another example, in one or more embodiments, the first dimming control and the second dimming control may be configured such that, when the brightness of the projected light is adjusted by combining the first dimming control and the second dimming control, in a case where the direction of increasing or the direction of decreasing the brightness of the projected light of the first dimming control is the same as the direction of increasing or the direction of decreasing the brightness of the projected light of the second dimming control, the first dimming control adjusts the brightness of the projected light at the same time that the second dimming control adjusts the brightness of the projected light. If configured in this manner, dimming control by the first dimming control and dimming control by the second dimming control may be performed simultaneously in cases where it is not necessary to avoid the situation where brightness of the projected light momentarily increases caused by the timing (order) of dimming control of one dimming control and the other dimming control. As a result, unlike the case where dimming control by the first dimming control and dimming control by the second dimming control are performed sequentially in a predetermined order, dimming control can be performed with a shorter control time.

As another example, according to one or more embodiments, the projector may comprise a head-up display device.

In another aspect, a dimming control method according to one or more embodiments may comprise adjusting brightness of a projected light using a first dimming control; adjusting the brightness of the projected light separately from the first dimming control using a second dimming control; combining the first dimming control and the second dimming control to adjust the brightness of the projected light; and controlling, using one of the first dimming control or the second dimming, a direction of decreasing the brightness of the projected light before controlling, using the other of the first dimming control or the second dimming control, a direction of increasing the brightness of the projected light.

As a result, according to one or more embodiments, in the course of the brightness of projected light being transitioned from the state before the change to the state after the change, by control, the brightness of the projected light is decreased using one dimming control and then the brightness of the projected light is increased using the other dimming control. Therefore, it is possible to avoid the situation where the brightness of the projected light transitions from the state before the change to the state after the change after temporarily (momentarily) becoming bright. As a result, when dimming control of projected light is performed using a plurality of dimming controls, it is possible to avoid a momentary increase in brightness of projected light. In particular, in a head-up display device that directly projects a projected image (projected light) within the field of view of a user looking at a display panel, the situation where the brightness of the projected light momentarily increases during dimming control of the projected light that creates the projected image is avoided. Therefore, the head-up display device according to one or more embodiments of the present invention can be useful for users who are operating other devices (such as driving a car) while looking at a projected image because a comfortable viewing environment is not lost.

According to one or more embodiments, it may be possible to avoid a momentary increase in brightness of projected light when dimming control is performed using a plurality of dimming control.

Further embodiments are defined in the dependent claims.

### [Brief Description of the Drawings]

FIG. 1 is a block diagram illustrating the configuration of a HUD device according to one or more embodiments of the present invention.
FIG. 2 is a diagram illustrating the state where the HUD device according to one or more embodiments of the present invention is mounted in a vehicle.
FIG. 3 is a diagram for explaining the dimming method related to the brightness of projected light in the HUD device according to one or more embodiments of the present invention.
FIG. 4 is a diagram illustrating a dimming control pattern in the HUD device according to one or more embodiments of the present invention and a dimming control pattern as comparative example 1 with respect to the one or more embodiments.
FIG. 5 is a diagram illustrating a dimming control pattern in the HUD device according to one or more embodiments of the present invention and a dimming control pattern as comparative example 2 with respect to the one or more embodiments.
FIG. 6 is a diagram illustrating the process flow of the controller when dimming control is performed in the HUD device according to one or more embodiments of the present invention.
FIG. 7 is an oblique diagram illustrating the configuration of a HUD device according to a modification example of one or more embodiments of the present invention.

### [Detailed Description of Embodiments]

Embodiments of the present invention will be described below based on the drawings.

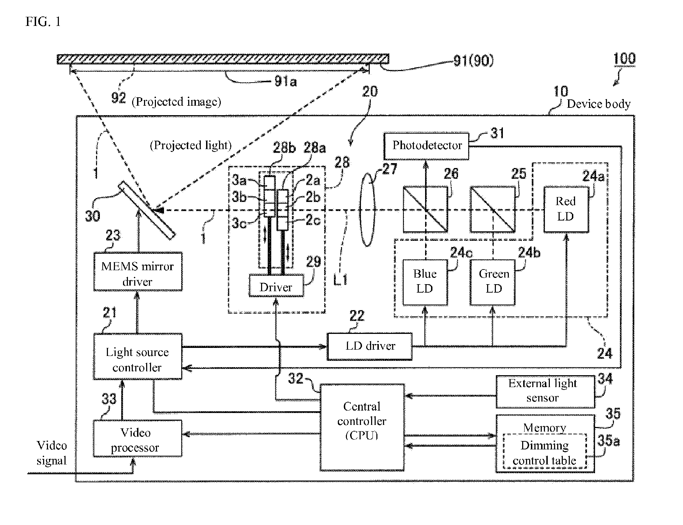

First, the configuration of a HUD (head-up display) device 100 according to one or more embodiments will be described in reference to FIGS. 1 to 5. The HUD device 100 is an example of a "projector" according to one or more embodiments of the present invention.

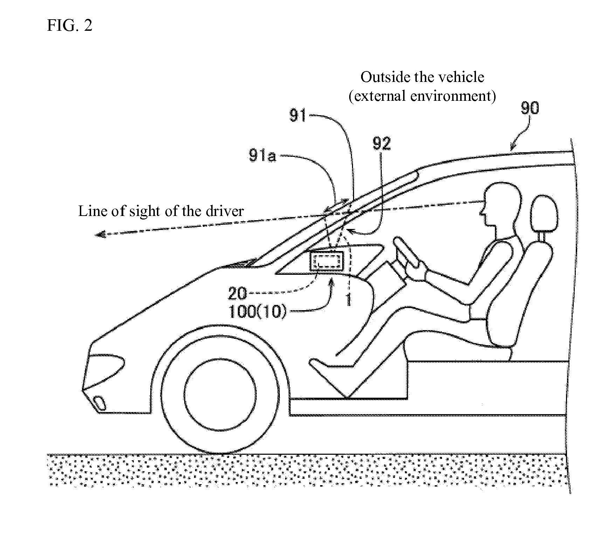

As shown in FIG. 1, the HUD device 100 according to one or more embodiments comprises a device body 10 into which a projector 20 containing a light generator 24 (light source) is incorporated. Further, as shown in FIG. 2, the device body 10 is mounted in an automobile 90, and has the function of projecting projected light 1 (projection laser light) output from the projector 20 on a predetermined display region 91a of a windshield 91. As a result, a projected image 92 having a predetermined brightness is projected on the windshield 91. This projected image 92 includes information to inform the user (driver) 93 of route information via a GPS, fuel consumption information of the automobile 90, etc. The HUD 100 is provided for directly projecting the projected image 92 within the field of view of the user 93. The windshield 91 is an example of the "display panel" according to one or more embodiments of the present invention.

Further, the HUD device 100, unlike a projector device that projects on a stationary screen, projects the projected image 92 on the display region 91a of the windshield 91 under conditions where the brightness of the external environment (outside the car) changes depending on the state of travel of the automobile 90. Therefore, the HUD device 100 is configured so as to perform a control operation which projects the projected image 92 on the windshield 91 while appropriately adjusting the brightness of the projected light 1 depending on the brightness of the external environment. This point will be described in detail later.

Also, as shown in FIG. 1, the projector 20 comprises a light source controller 21, an LD (laser diode) driver 22, a MEMS mirror driver 23, a red LD (laser diode) 24a, green LD 24b and blue LD 24c which serve as the light generator 24, two polarizing beam splitters 25 and 26 which constitute an optical system, and an optical lens 27. The light generator 24 is an example of the "first dimming control" of the present invention. Also, the red LD 24a, green LD 24b and blue LD 24c are examples of the "light generator" according to one or more embodiments of the present invention.

The light source controller 21 has the function of individually electrically controlling the power of the laser beams irradiated from each of the red LD 24a, green LD 24b and blue LD 24c which constitute the light generator 24, by controlling the LD driver 22 based on an image signal externally input to the image processor 33 to be described later. As a result, it is configured such that the light intensity of the projected light 1 irradiated and synthesized from the red LD 24a, green LD 24b and blue LD 24c is adjusted in the range from approximately 15% to approximately 100%. Further, the MEMS mirror driver 23 has the function of dynamically controlling the attitude of the MEMS mirror 30 to be described later based on an output signal from the light source controller 21. Here, the laser light output from the red LD 24 and the laser light output from the green LD 24b pass through the polarizing beam splitter 25 and 26 and the optical lens 27 in that order, and are incident to the MEMS mirror 30. Also, the laser light output from the blue LD 24c passes through the polarizing beam splitter 26 and the optical lens 27 in that order, and is incident to the MEMS mirror 30.

Further, the projector 20 also comprises a neutral density filter 28 which includes a driver 29, a MEMS (Micro Electro Mechanical System) mirror 30 which serves as the driver for scanning laser light, a photodetector 31 made up of a photodetector which detects light intensity of the synthesized RGB laser beam and the like, a central controller 32 made up of a CPU, an image processor 33, an external light sensor 34 made up of a photodetector which can detect the brightness of the external environment (brightness near the windshield 91), and a memory 35. The neutral density filter 28 is an example of the "second dimming control" according to one or more embodiments of the present invention.

The neutral density filter 28 has the function of adjusting (reducing) the amount of transmitted light of the projected light 1 (projection laser light). Specifically, when the external environment is relatively bright, the amount of transmitted light is increased in accordance with the external environment by setting the dimming ratio (magnitude of reduction of transmitted light) of the neutral density filter 28 to a low value. Also, when the external environment is relatively dark, the amount of transmitted light is decreased in accordance with the external environment by setting the dimming ratio (magnitude of reduction of transmitted light) of the neutral density filter 28 to a high value. For example, when the automobile 90 (refer to FIG. 2) is traveling during the day or if it stops in a place that is relative bright even at night, the dimming ratio of the neutral density filter 28 is set to a relatively low value (the amount of light that passes through the neutral density filter 28 is increased), and when the automobile is traveling in a tunnel or at night, the dimming ratio of the neutral density filter 28 is set to a relatively high value (the amount of light that passes through the neutral density filter 28 is decreased). As a result, it is configured so as to enable the user (driver) 93 to see the projected image 92, of which the projected light 1 is appropriately adjusted in accordance with the brightness of the external environment. Furthermore, as will be described later, the operation that changes the dimming ratio of the neutral density filter 28 is performed based on a detection signal that corresponds to the brightness of the external environment input to the central controller 32 from the external light sensor 34.

Further, as shown in FIG. 1, neutral density filter 28 comprises an absorbing-type neutral density filter (ND filter) 28a and neutral density filter (ND filter) 28b. Also, in neutral density filter 28a, three regions, region 2a, region 2b and region 2c, are arranged linearly (in a row) adjacent to each other. Here, region 2a is transparent (transmittance: 100%), and region 2b (transmittance: approximately 24%) and region 2c (transmittance: approximately 5.3%) are configured in order of increasing dimming ratio. That is, in region 2a, the projected light 1 is transmitted without being dimmed, while in region 2c, the projected light 1 is dimmed the most (amount of transmitted light is lowest) in neutral density filter 28a. Similarly, neutral density filter 28b is formed by arranging three regions, region 3a, region 3b and region 3c, linearly (in a row) adjacent to each other. Here, region 3a is transparent (transmittance: 100%), and region 3b (transmittance: approximately 5.3%) and region 3c (transmittance: approximately 1.3%) are configured in order of increasing dimming ratio. That is, in region 3a, the projected light 1 is transmitted without being dimmed, while in region 3c, the projected light 1 is dimmed the most (amount of transmitted light is lowest) in neutral density filter 28b.

The driver 29 comprises a slide mechanism (not illustrated) for sliding neutral density filters 28a and 28b independent of each other. Such a slide mechanism is constructed of, for example, a stepping motor, a ball screw shaft connected to the rotating shaft of the stepping motor, and nut members attached on the neutral density filter 28a (28b) side and screwed onto the ball screw shaft. By the nut members being linearly controlled on the ball screw shaft according to rotation control of the stepping motor, neutral density filter 28a (28b) is moved to the predetermined position. Therefore, a slide mechanism for sliding neutral density filter 28a (stepping motor, ball screw shaft and nut member) and a slide mechanism for sliding neutral density filter 28b (stepping motor, ball screw shaft and nut member) are provided in the driver 29. Further, the two neutral density filters 28a and 28b are configured such that they are each mechanically moved in the direction that traverses the light path L1 of the projected light 1 in the state where they are lined up substantially parallel to the light path L1 of the projected light 1.

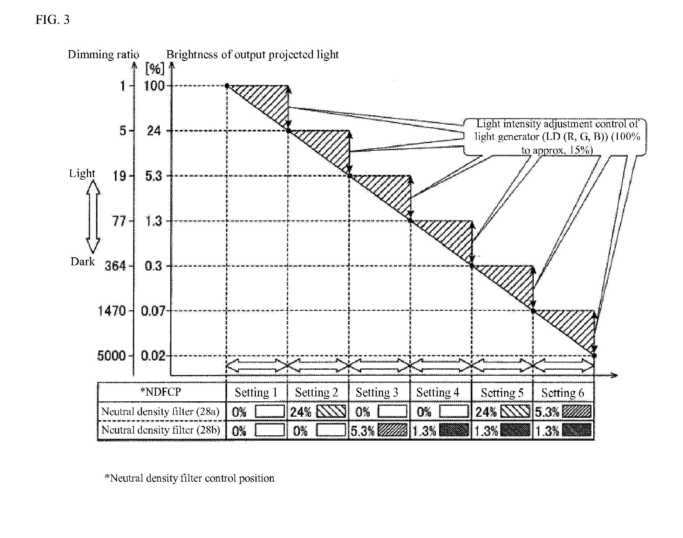

The projected light 1 is dimmed by moving the two neutral density filters 28a and 28b in the neutral density filter 28 according to a predetermined control operation. That is, as shown in FIG. 3, it is configured such that the dimming ratio can be changed to six different levels ("setting 1" through "setting 6") by means of the movement position of the two neutral density filters 28a and 28b, by any one of the regions 2a, 2b or 2c of neutral density filter 28a overlapping any one of the regions 3a, 3b or 3c of neutral density filter 28b.

More specifically, at "setting 1," the state where region 2a and region 3a (refer to FIG. 1), which both have transmittance of 100%, overlap and the dimming ratio is 1 (the state where brightness is approximately 100% and is substantially undimmed) is obtained. At "setting 2," the state where region 2b having transmittance of approximately 24% (refer to FIG. 1) and region 3a having transmittance of approximately 100% overlap and the dimming ratio is approximately 24 (brightness: approx. 24%) is obtained. At "setting 3," the state where region 2a having transmittance of approximately 100% and region 3b having transmittance of approximately 5.3% (refer to FIG. 1) overlap and the dimming ratio is approximately 19 (brightness: approx. 5.3%) is obtained. At "setting 4," the state where region 2a having transmittance of approximately 100% and region 3c having transmittance of approximately 1.3% (refer to FIG. 1) overlap and the dimming ratio is approximately 77 (brightness: approx. 1.3%) is obtained. At "setting 5," the state where region 2b having transmittance of approximately 24% and region 3c having transmittance of approximately 1.3% overlap and the dimming ratio is approximately 364 (brightness: approx. 0.3%) is obtained. At "setting 6," the state where region 2c having transmittance of approximately 5.3% (refer to FIG. 1) and region 3c having transmittance of approximately 1.3% overlap and the dimming ratio is approximately 1470 (brightness: approx. 0.07%) is obtained. In this manner, the neutral density filter 28 is configured such that the amount of transmitted light of the projected light 1 can be independently adjusted step-wise by alternatively changing the combination of any of filter regions 2a to 2c and any of filter regions 3a to 3c for reducing the amount of transmitted light of the projected light 1 between "setting 1" and "setting 6."

Further, the projector 20 (refer to FIG. 1) is configured such that, in addition to the step-wise adjustment operation on the neutral density filter 28, the light intensity of the light generator 24 (refer to FIG. 1) (synthesized light intensity value of the red LD 24a, green LD 24b and blue LD 24c) is adjusted by the light source controller 21 (LD driver 22).

That is, as shown in FIG. 3, when the neutral density filter 28 is at "setting 1" (dimming ratio = 1) and the light intensity of the light generator 24 (refer to FIG. 1) (synthesized light intensity value) is 100%, the brightness of the final projected light 1 (output projected light) output from the projector 20 (refer to FIG. 1) is substantially 100%. By gradually reducing the light intensity of the light generator 24 (RGB synthesized light intensity value) while maintaining "setting 1" (dimming ratio = 1), the brightness of the final projected light 1 (output projected light) is decreased to around 24% (dimming ratio around 5). Further, when the neutral density filter 28 is at "setting 2" (dimming ratio = 5) and the light intensity of the light generator 24 is approximately 90%, the brightness of the final projected light 1 (output projected light) is 24%. By gradually reducing the light intensity of the light generator 24 (RGB synthesized light intensity value) while maintaining "setting 2" (dimming ratio = 5), the brightness of the final projected light 1 (output projected light) is decreased to around 5.3% (dimming ratio around 19). When the neutral density filter 28 is at "setting 3" (dimming ratio = 19) and the light intensity of the light generator 24 is approximately 90%, the brightness of the final projected light 1 (output projected light) is 5.3%. By gradually reducing the light intensity of the light generator 24 (RGB synthesized light intensity value) while maintaining "setting 3" (dimming ratio = 19), the brightness of the final projected light 1 (output projected light) is decreased to around 1.3% (dimming ratio around 77). Beyond that, when the neutral density filter 28 is at "setting 4," "setting 5" and "setting 6," dimming control by changing the light intensity of the light generator 24 between maximum light intensity and minimum light intensity is repeated. Also, by gradually reducing the light intensity of the light generator 24 (RGB synthesized light intensity value) while maintaining "setting 6" (dimming ratio = 1470), the brightness of the final projected light 1 (output projected light) is decreased to around 0.02% (dimming ratio around 5000).

In this manner, the HUD device 100 (refer to FIG. 1) is configured such that the combination of dimming ratios of the neutral density filter 28 and the brightness of the projected light 1 by light intensity adjustment of the light generator 24 is changed between 100% (dimming ratio 1) and approximately 0.02% (dimming ratio 5000). Further, the setting values stated in FIG. 3 are stored as a dimming control table 35a (refer to FIG. 1) in the memory 35 (refer to FIG. 1).

In one or more embodiments, when the brightness of the projected light 1 is adjusted by combining the light generator 24 which can adjust the light intensity (RGB light intensity) of the projected light 1 and the neutral density filter 28 which can adjust the amount of transmitted light (dimming ratio) of the projected light 1, control in the direction of decreasing the brightness of the projected light 1 of one of either the light generator 24 or the neutral density filter 28 is performed before control in the direction of increasing the brightness of the projected light 1 of the other of either the light generator 24 or the neutral density filter 28.

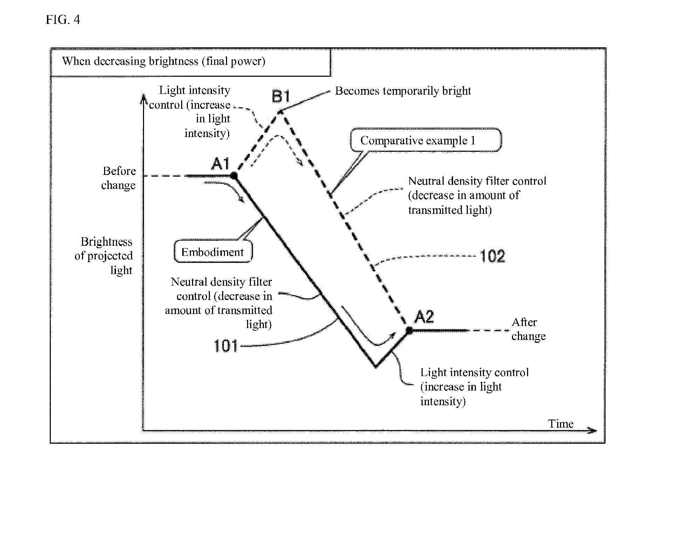

For example, as shown in FIG. 4, one or more embodiments are configured such that when the brightness of the projected light 1 is changed from any state A1 to any state A2 that is darker than state A1 by combining the light generator 24 and the neutral density filter 28, control that decreases the amount of transmitted light by the neutral density filter 28 is performed before control that increases the light intensity of the projected light 1 by the light generator 24, along control path 101 (indicated by thick solid line). That is, when changed from state A1 and state A2, dimming control along control path 102 (indicated by the dashed line) (control that decreases the amount of transmitted light by the neutral density filter 28 after increasing light intensity of the projected light 1 by the light generator 24), as shown in comparative example 1, is not performed. If dimming control is performed along control path 102 as in comparative example 1, the brightness of the projected light 1 transitions from state A1 to final state A2 after passing through state B1 where it becomes temporarily (momentarily) bright. In this case, momentary brightness impacts the eye and a comfortable viewing environment for the user (driver), on whose eyes the projected image 92 (projected light 1) on the windshield 91 is projected, is lost because in the course of the brightness of the projected image 92 becoming darker, the projected image 92 becomes darker after momentarily becoming bright. In contrast, when dimming control is performed along control path 101, the situation where momentary brightness impacts the eyes of the user (driver) 93 is avoided. In this manner, the situation where the brightness of the projected light 1 transitions from the state before the change to the final state after the change after becoming temporarily (momentarily) bright is avoided. State A1 and state A2 are examples of the "first state" and "second state," respectively, according to one or more embodiments of the present invention.

Here, an example of control that decreases the brightness of the projected light 1 from state A1 to state A2 cited in FIG. 3 is the case where it is transitioned from the control point where the neutral density filter 28 is at "setting 2" and the light intensity of the light generator 24 is approximately 24%, to the control point where the neutral density filter 28 is at "setting 5" and the light intensity of the light generator 24 is approximately 92%. In this case, according to control path 101 (refer to FIG. 4), first, control that decreases the amount of transmitted light from the neutral density filter 28 from "setting 2 (dimming ratio approximately 24)" to "setting 5 (dimming ratio approximately 364)" is performed, and after that, control that increases the light intensity of the projected light 1 by the light generator 24 from approximately 20% to approximately 92% is performed. Furthermore, control that decreases brightness from state A1 to state A2 exists even in cases other than transition control between the control points given as an example here. Control path 101 (refer to FIG. 4) is used even in transition control between these control points.

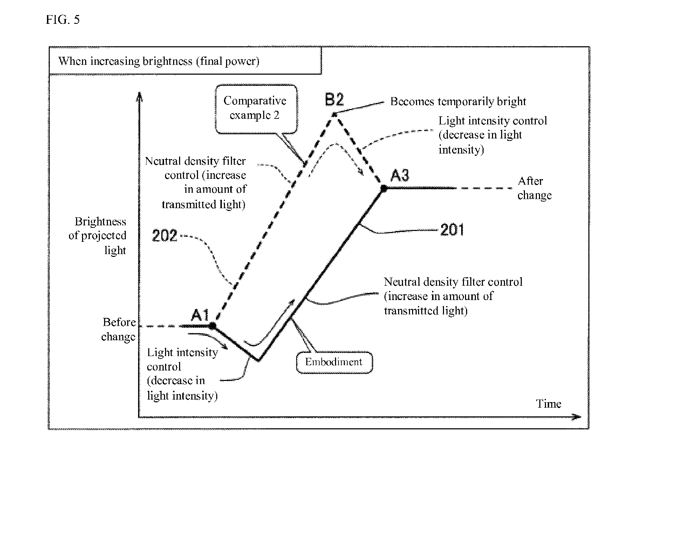

As another example, as shown in FIG. 5, when the brightness of the projected light 1 is changed from state A1 to state A3 which is brighter than state A1 by combining the light generator 24 and the neutral density filter 28, control that decreases the light intensity of the projected light 1 by the light generator 24 is performed before control that increases the amount of transmitted light by the neutral density filter 28, along control path 201 (indicated by the thick solid line). That is, in one or more embodiments, when changed from state A1 to state A3, dimming control along control path 202 (indicated by dashed line) as shown in comparative example 2 (control that increases the amount of transmitted light by the neutral density filter 28, and then decreases the light intensity of the projected light 1 by the light generator 24) is not performed. If dimming control is performed along control path 202, the brightness of the projected light 1 transitions from state A1 to final state A3 after passing through state B2 where it becomes temporarily (momentarily) bright. In this case as well, momentary brightness impacts the eyes and a comfortable viewing environment for the user (driver), on whose eyes the projected image 92 (projected light 1) on the windshield 91 is projected, is lost because in the course of the brightness of the projected image 92 becoming darker, the projected image 92 becomes darker after momentarily becoming bright. In contrast, if dimming control is performed along control path 201, the situation where momentary brightness impacts the eyes of the user (driver) 93 is avoided because the brightness of the projected light 1 transitions from state A1 to final state A3 without becoming temporarily dark. In this manner, the situation where the brightness of the projected light 1 transitions from the state before the change to the state after the change after becoming temporarily (momentarily) bright is avoided. State A3 is an example of the "third state" according to one or more embodiments of the present invention.

Here, an example of control that increases the brightness of the projected light 1 from state A1 to state A3 cited in FIG. 3 is the case where it transitions from the control point where the neutral density filter 28 is at "setting 5" and the light intensity of the light generator 24 is approximately 92%, to the control point where the neutral density filter 28 is at "setting 2" and the light intensity of the light generator 24 is approximately 20%. In this case, according to control path 201 (refer to FIG. 5), first, control that decreases the light intensity of the projected light 1 by the light generator 24 from approximately 92% to approximately 20% is performed, and after that, control that increases the amount of transmitted light from the neutral density filter 28 at "setting 5 (dimming ratio approximately 364)" to "setting 2 (dimming ratio approximately 24)" is performed. Furthermore, control that increases brightness from state A1 to state A3 exists even in cases other than transition control between the control points given as an example here. Control path 201 (refer to FIG. 5) is used even in transition control between these control points.

Also, when control that decreases the amount of transmitted light by the neutral density filter 28 (refer to FIG. 1) is performed before control that increases the light intensity of the projected light 1 by the light generator 24 (refer to FIG. 1), control that decreases the transmitted light that passes through the neutral density filter 28 is performed by changing the combination of neutral density filter 28a (regions 2a to 2c (refer to FIG. 1)) and neutral density filter 28b (regions 3a to 3c (refer to FIG. 1)) is performed, and after that, control that increases the light intensity (RGB synthesized light intensity value) of the projected light 1 by the light generator 24 is performed. That is, control that increases the light intensity (RGB synthesized light intensity value) of the projected light 1 by electrically changing the power of the light generator 24 is performed after the movement operation that mechanically moves neutral density filter 28a

(regions 2a to 2c) and neutral density filter 28b (regions 3a to 3c) by means of the driver 29 is completed.

Furthermore, control in the direction that decreases the brightness of the projected light 1 is performed before control in the direction that increases the brightness of the projected light 1 is performed in both the case where control that decreases the amount of transmitted light by the neutral density filter 28 and control that increases the RGB light intensity of the projected light 1 by the light generator 24 are combined, and the case where control that decreases the RGB light intensity of the projected light 1 by the light generator 24 and control that increases the amount of transmitted light by the neutral density filter 28 are combined. In contrast, in the case where the direction of increasing or the direction of decreasing the brightness of the projected light 1 of the light generator 24 is the same as the direction of increasing or the direction of decreasing the brightness of the projected light 1 of the neutral density filter 28, control that adjusts the brightness of the projected light 1 by the light generator 24 and control that adjusts the brightness of the projected light 1 by the neutral density filter 28 are performed at the same time.

That is, in the case where control that increases the amount of transmitted light by the neutral density filter 28 (decreases the dimming ratio) and control that increases the light intensity of the projected light 1 by the light generator 24 must be performed, control that adjusts the brightness of the projected light 1 by the light generator 24 and control that adjusts the brightness of the projected light 1 by the neutral density filter 28 are performed simultaneously (in simultaneous progression). Also, in the case where control that decreases the amount of transmitted light by the neutral density filter 28 (increases the dimming ratio) and control that decreases the light intensity of the projected light 1 by the light generator 24 must be performed, control that adjusts the brightness of the projected light 1 by the light generator 24 and control that adjusts the brightness of the projected light 1 by the neutral density filter 28 are performed simultaneously (in simultaneous progression).

Further, as shown in FIG. 1, the MEMS mirror 30 has the function of causing the colors of laser light of red (R), green (G) and blue (B) that pass through the optical lens 27 and are incident to the MEMS mirror 30 to be scanned, in a state where they are converged into one, around two axes in the horizontal direction (transverse direction (X direction)) and vertical direction (longitudinal direction (Y direction)) on the windshield 91 (refer to FIG. 1), by dynamically controlling the attitude (angle of obliqueness) of the MEMS mirror 30 around two axes in a first direction (*e.g.,* a horizontal direction) and a second direction (*i.e.,* a vertical direction) perpendicular to the first direction. Also, the photodetector 31 has the function of detecting the light intensity of the projected light 1 (projection laser light) in which laser light irradiated from the red LD 24a, green LD 24b and blue LD 24c are synthesized, and the detection signal is fed back into control of the light source controller 21.

Further, the central controller 32 has the function of comprehensively controlling operation of the projector 20. The image processor 33 has the function of analyzing the externally-input image and recognizing pixel information. The image processor 33 also has the function of outputting the externally-input image to the light source controller 21 after multiplexing it with the signal waveform generated by the central controller 32. Also, the external light sensor 34 has the function of inputting a detection signal corresponding to the brightness of the external environment to the central controller 32. Therefore, the dimming ratio of the neutral density filter 28 and the light intensity setting values (R light intensity value, G light intensity value and B light intensity value) of the light generator 24 are computed in the central controller 32 based on detection signals corresponding to the brightness of the external environment from the external light sensor 34. Based on the computation results of the central controller 32, the light source controller 21 (LD driver 22) and the driver 29 are each controlled. Further, in a predetermined region of the memory 35, a control program executed by the central controller 32 is stored, and the aforementioned dimming ratio setting values of the neutral density filter 28 and light intensity setting values of the light generator 24 and so forth (refer to FIG. 3) are stored as the dimming control table 35a. The memory 35 is also used as working memory where control parameters are temporarily saved when the control program is being executed.

Next, in accordance with one or more embodiments, the process flow of the central controller 32 when the projection operation on the windshield 91 of the automobile 90 is performed by the HUD device 100 will be described in reference to FIGS. 1 and 2 and FIGS. 4 to 6. Furthermore, the process flow of the central controller 32 (refer to FIG. 1) when the brightness of the external environment suddenly changes while the automobile 90 (refer to FIG. 2) is travelling and the brightness of the projected image 92 (refer to FIG. 2) projected on the windshield 91 (refer to FIG. 2) is changed so as to follow that change will be described below. That is, the control operation actually performed by the central controller 32 when the currently set brightness of the projected light 1 is changed to a different brightness according to the brightness of the external environment will be described.

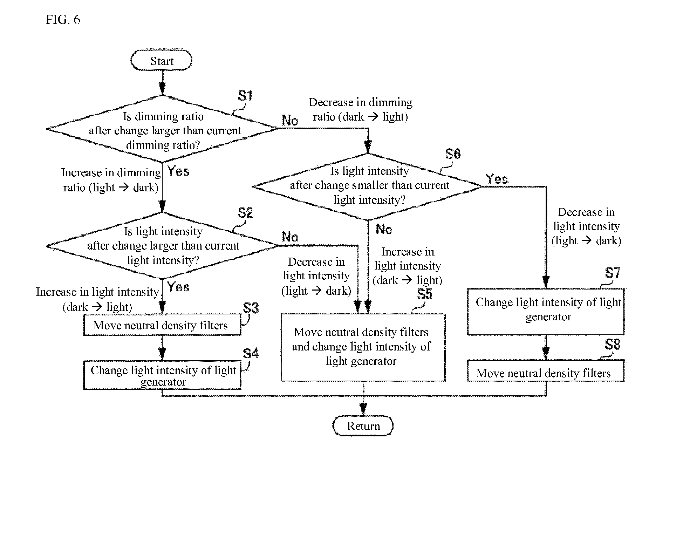

As shown in FIG. 6, first, in step S1, the central controller 32 (refer to FIG. 1) judges whether the next dimming ratio of the neutral density filter 28 to be changed to is larger than the currently set dimming ratio of the neutral density filter 28 (refer to FIG. 1) (whether the transmittance is smaller).

If it is judged in step S1 that the next dimming ratio of the neutral density filter 28 to be changed to is larger than the currently set dimming ratio of the neutral density filter 28 (amount of transmitted light is smaller), in step S2, the central controller 32 judges whether the next light intensity value (RGB light intensity value) of the light generator 24 to be changed to is larger than the currently set light intensity value (RGB light intensity value) of the light generator 24 (refer to FIG. 1).

Here, if it is judged in step S2 that the next light intensity value (RGB light intensity value) of the light generator 24 to be changed to is larger than the currently set light intensity value (RGB light intensity value) of the light generator 24, first, in step S3, control that decreases the amount of transmitted light of the projected light 1 using the neutral density filter 28 is performed by moving neutral density filters 28a and 28b in the neutral density filter 28 to individual predetermined positions. Then, in step S4, control that increases the light intensity of the projected light 1 from the light generator 24 is performed based on a command from the light source controller 21 (refer to FIG. 1). For example, control is executed along control path 101 (thick solid line) in FIG. 4. As a result, in the HUD device 100 (refer to FIG. 1), the brightness of the projected light 1 is transitioned from state A1 up to that time to the state of brightness after the change A2 without passing through state B1 (comparative example 1), and the main control flow is complete.

Further, as shown in FIG. 6, if it is judged in step S2 that the next light intensity value (RGB light intensity value) of the light generator 24 to be changed to is smaller than the currently set light intensity value (RGB light intensity value) of the light generator 24, in step S5, control that decreases the amount of transmitted light of the projected light 1 (increases the dimming ratio) is performed by individually moving neutral density filters 28a and 28b in the neutral density filter 28 and control that decreases the light intensity of the projected light 1 from the light generator 24 based on a command from the light source controller 21 are performed simultaneously. That is, the mechanical movement operation of neutral density filters 28a and 28b by the driver 29 (refer to FIG. 1) and electrical dimming control of the light generator 24 by the LD driver 22 (refer to FIG. 1) based on the light source controller 21 (refer to FIG. 1) are executed in simultaneous progression. As a result, in the HUD device 100, the brightness of the projected light 1 is transitioned from the state up to that time to the state of brightness after the change, and the main control flow is complete.

On the other hand, if it is judged in step S1 that the next dimming ratio of the neutral density filter 28 to be changed to is smaller than the currently set dimming ratio of the neutral density filter 28 (amount of transmitted light is larger), in step S6, the central controller 32 judges whether the next light intensity value (RGB light intensity value) of the light generator 24 to be changed to is smaller than the currently set light intensity value (RGB light intensity value) of the light generator 24.

Here, if it is judged in step S6 that the next light intensity value (RGB light intensity value) of the light generator 24 to be changed to is smaller than the currently set light intensity value (RGB light intensity value) of the light generator 24, first, in step S7, control that decreases the light intensity of the projected light from the light generator 24 is performed based on a command from the light source controller 21. Then, in step S8, control that increases the amount of transmitted light of the projected light 1 using the neutral density filter 28 is performed by moving neutral density filters 28a and 28b in the neutral density filter 28 to individual predetermined positions. For example, control is executed along control path 201 (thick solid line) in FIG. 5. As a result, in the HUD device 100 (refer to FIG. 1), the brightness of the projected light 1 is transitioned from state A1 up to that time to the state of brightness after the change A3 without passing through state B2 (comparative example 2), and the main control flow is complete.

Also, if it is judged in step S6 that the next light intensity value (RGB light intensity value) of the light generator 24 to be changed to is larger than the currently set light intensity value (RGB light intensity value) of the light generator 24, in step S5, control that increases the amount of transmitted light of the projected light 1 (decreases the dimming ratio) is performed by individually moving neutral density filters 28a and 28b in the neutral density filter 28 and control that increases the light intensity of the projected light 1 from the light generator 24 based on a command from the light source controller 21 are performed simultaneously. That is, the mechanical movement operation of neutral density filters 28a and 28b by the driver 29 and electrical dimming control of the light generator 24 by the LD driver 22 based on the light source controller 21 are executed in simultaneous progression. As a result, in the HUD device 100, the brightness of the projected light 1 is transitioned from the state up to that time to the state of brightness after the change, and the main control flow is complete. Furthermore, the main control flow illustrated in FIG. 6 is again executed after a predetermined control period has elapsed.

In one or more embodiments, when the brightness of the projected light 1 is adjusted by combining the light generator 24 configured such that the light intensity (RGB light intensity) of the projected light 1 can be adjusted and a neutral density filter 28 configured such that the amount of transmitted light (dimming ratio) of the projected light 1 can be adjusted, control in the direction of decreasing the brightness of the projected light 1 of one of either the light generator 24 or the neutral density filter 28 is performed before control in the direction of increasing the brightness of the projected light 1 of the other of either the light generator 24 or the neutral density filter 28. As a result, in the course of the brightness of the projected light 1 being transitioned from the state before the change to the state after the change, by control, the brightness of the projected light 1 is decreased using one dimming control (the light generator 24 or neutral density filter 28) and then the brightness of the projected light 1 is increased using the other dimming control (the neutral density filter 28 or light generator 24). Therefore, it is possible to avoid the situation where the brightness of the projected light 1 transitions from the state before the change to the state after the change after temporarily (momentarily) becoming bright. As a result, when dimming control of the projected light 1 is performed using the light generator 24 and the neutral density filter 28, it is possible to avoid a momentary increase in brightness of the projected light 1. In particular, in the HUD device 100 which directly projects the projected image 92 (projected light 1) within the field of view of the user 93 looking at the windshield 91, the situation where the brightness of the projected light 1 momentarily increases during dimming control of the projected light 1 that creates the projected image 92 is avoided. Therefore, the HUD device 100 is extremely useful for users (drivers) 93 driving the automobile 90 while looking at the projected image 92 because a comfortable viewing environment is not lost.

Further, in one or more embodiments, when the brightness of the projected light 1 is changed from state A1 to state A2 which is darker than state A1 by combining the light generator 24 and the neutral density filter 28, control that decreases the amount of transmitted light by the neutral density filter 28 is performed before control that increases the light intensity of the projected light 1 by the light generator 24. When the brightness of the projected light 1 is adjusted by combining control that decreases the amount of transmitted light by the neutral density filter 28 and control that increases the light intensity of the projected light 1 by the light generator 24 in this manner, by performing control that decreases the amount of transmitted light first, the phenomenon of brightness temporarily (momentarily) increasing (state B1) between state A1 (refer to FIG. 4) and state A2 (refer to FIG. 4) is not induced. Therefore, loss of comfort when the user (driver) 93 views (looks at) the projected image 92 projected by the HUD device 100 can be effectively avoided.

Further, in one or more embodiments, when the brightness of the projected light 1 is changed from state A1 to state A3 which is brighter than state A1 by combining the light generator 24 and the neutral density filter 28, control that decreases the light intensity of the projected light 1 (RGB synthesized light intensity value) by the light generator 24 is performed before control that increases the amount of transmitted light by the neutral density filter 28. When the brightness of the projected light 1 is adjusted by combining control that increases the amount of transmitted light by the neutral density filter 28 and control that decreases the light intensity of the projected light 1 by the light generator 24 in this manner, by performing control that decreases light intensity (RGB synthesized light intensity value) first, the phenomenon of brightness temporarily (momentarily) increasing (state B2) between state A1 (refer to FIG. 5) and state A3 (refer to FIG. 5) is not induced. Therefore, loss of comfort when the user (driver) 93 views (looks at) the projected image 92 projected by the HUD device 100 can be effectively avoided.

Also, in one or more embodiments, the neutral density filter 28 is configured such that the amount of transmitted light can be adjusted by changing the combination of neutral density filter 28a (regions 2a to 2c) and neutral density filter 28b (region 3a to 3c) for decreasing the amount of transmitted light. When control that decreases the amount of transmitted light by the neutral density filter 28 is performed before control that increases the light intensity of the projected light 1 by the light generator 24, control that decreases the amount of transmitted light is performed by changing the combination of neutral density filter 28a (regions 2a to 2c) and neutral density filter 28b (region 3a to 3c), and after that, control that increases the light intensity of the projected light 1 by the light generator 24 is performed. As a result, even when the HUD device 100 is configured so as to finely adjust the amount of transmitted light using neutral density filter 28a (regions 2a to 2c) and neutral density filter 28b (region 3a to 3c), it is possible to increase the light intensity of the projected light 1 by the light generator 24 after assuredly decreasing the amount of transmitted light by changing the combination of neutral density filters 28a and 28b. Therefore, it is possible to assuredly avoid the situation where the brightness of the projected light 1 transitions from the state before the change to the state after the change after temporarily (momentarily) becoming bright.

Further, in one or more embodiments, the light generator 24 (red LD 24a, green LD 24b and blue LD 24c) is configured so as to adjust the light intensity of the projected light 1 output from the light generator 24 (red LD 24a, green LD 24b and blue LD 24c each individually) by electrically changing the power. Also, the neutral density filter 28 is configured so as to adjust the amount of transmitted light by mechanically moving each of neutral density filter 28a (regions 2a to 2c) and neutral density filter 28b (regions 3a to 3c) individually in the direction that traverses the light path L1 of the projected light 1. It is also configured such that when control that decreases the amount of transmitted light by the neutral density filter 28 is performed before control that increases light intensity of the projected light 1 by the light generator 24, control that increases light intensity of the projected light 1 by electrically changing the power of the light generator 24 is performed after the movement operation that mechanically moves neutral density filter 28a (regions 2a to 2c) and neutral density filter 28b (regions 3a to 3c) is completed. As a result, light intensity of the projected light 1 by the light generator 24 can be increased by electrical power control after the amount of transmitted light that passes through the neutral density filter 28 has been assuredly decreased by assuredly completing dimming control of the neutral density filter 28 accompanying the mechanical movement operation. Therefore, it is possible to assuredly avoid the situation where the brightness of the projected light 1 transitions from the state before the change to the state after the change after temporarily (momentarily) becoming bright.

Also, in one or more embodiments, when the brightness of the projected light is adjusted by combining the light generator 24 and the neutral density filter 28, in the case where the direction of increasing or the direction of decreasing the brightness of the projected light 1 of the light generator 24 is the same as the direction of increasing or the direction of decreasing the brightness of the projected light 1 of the neutral density filter 28, control that adjusts the brightness of the projected light 1 by the light generator 24 and control that adjusts the brightness of the projected light 1 by the neutral density filter 28 are performed at the same time. As a result, dimming control by the light generator 24 and dimming control by the neutral density filter 28 may be performed in simultaneous progression in cases where it is not necessary to avoid the situation where brightness of the projected light momentarily increases caused by the timing (order) of dimming control of one dimming control (light generator 24 or neutral density filter 28) and the other dimming control (neutral density filter 28 or light generator 24). Therefore, unlike the case where dimming control by the light generator 24 and dimming control by the neutral density filter 28 are performed sequentially in a predetermined order, dimming control can be performed with a shorter control time.

Furthermore, the embodiments disclosed here are illustrative in all aspects, and should not be considered as restrictive. The scope of the present invention is not described in the aforementioned embodiments but is shown in the Claims, and also encompasses all changes within the scope and meaning equivalent to the Claims.

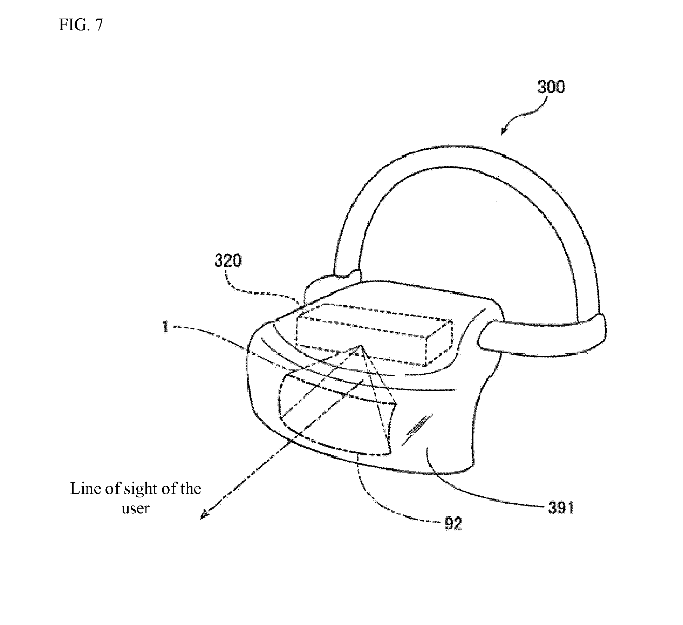

For example, in the aforementioned embodiments, an example in which the HUD device 100 is mounted in an automobile 90 is described, but the present invention is not limited thereto. In the present invention, for example, a HUD device can be mounted in a location such that a user can look at the projected image in a transportation vehicle other than an automobile, such as in front of the driver's seat or passenger's seat of a train or aircraft. Also, as shown in the modification example illustrated in FIG. 7, one or more embodiments of the present invention may also be applied to a HUD device 300 which can be attached to the head of the user, comprising a projector 20a and a transparent display panel 391 arranged ahead of the line of sight of a user. The HUD device 300 is an example of the "projector" according to one or more embodiments of the present invention, and the transparent display panel 391 is an example of the "display panel" according to one or more embodiments of the present invention.

Further, in one or more embodiments, the control flow related to dimming control by the central controller 32 (refer to FIG. 6) illustrates an example configured such that a comparison of the dimming ratio of the neutral density filter 28 of the current control point and the control point after a change (increase/decrease comparison) is performed first, and then a comparison of the light intensity value of the light generator 24 of the current control point and the control point after the change (increase/decrease comparison) is performed, but the present invention is not limited thereto. In one or more embodiments of the present invention, the control flow related to dimming control by the central controller 32 may also be configured such that a comparison of the light intensity value of the light generator 24 of the current control point and the control point after a change (increase/decrease comparison) is performed first, and then a comparison of the dimming ratio of the neutral density filter 28 of the current control point and the control point after the change (increase/decrease comparison) is performed.

Also, in one or more embodiments, an example in which the neutral density filter 28 is constructed from neutral density filters 28a and 28b is described, but the present invention is not limited thereto. In one or more embodiments of the present invention, the neutral density filter 28 may be constructed from one neutral density filter in which filter regions having mutually different amounts of transmittance (dimming ratios) are connected, or it can be constructed from three or more neutral density filters. Also, it may be configured such that filter regions having mutually different amounts of transmittance (dimming ratios) are connected in an annular shape in one neutral density filter and control of the amount of transmitted light accompanying control of the rotation position of the neutral density filter is performed by the driver 29.

Further, in one or more embodiments, an example in which the light generator 24 is constructed from a red LD 24a, a green LD 24b and a blue LD 24c is described, but the present invention is not limited thereto. The light generator according to one or more embodiments of the present invention may be constructed of two or four or more laser light sources.

Also, in one or more embodiments, an example in which a laser light source made up of a red LD 24a, a green LD 24b and a blue LD 24c is described as an example of the light generator of the present invention, but the present invention is not limited thereto. The light generator according to one or more embodiments of the present invention may also be constructed using light sources other than laser light sources.

Further, in one or more embodiments, for convenience of explanation, the control processes of the central controller 32 are described using a flow-driven flowchart for performing processes in order along the process flow, but the present invention is not limited thereto. In one or more embodiments of the present invention, the processes of the central controller 32 may also be performed by event-driven processes for executing processes in event units. In this case, processes may be performed in a completely event-driven manner, or by a combination of event-driven style and flow-driven style.

### [Description of the Reference Numerals]

- 1: Projected light
- 2a, 2b, 2c: Regions
- 3a, 3b, 3c: Regions
- 24: Light generator (*e.g*., first dimming control)
- 24a: Red LD (light generator)
- 24b: Green LD (light generator)
- 24c: Blue LD (light generator)
- 28: Neutral density filter (*e.g*., second dimming control)
- 28a, 28b: Neutral density filters
- 32: Central controller
- 91: Windshield (display panel)
- 100, 300: Head-up display device (projectors)
- 391: Transparent display panel (display panel)

## Claims

1. A projector comprising:
a first dimming control that adjusts brightness of a projected light (1); and
a second dimming control that adjusts the brightness of the projected light (1) separately from the first dimming control,
wherein, when the brightness of the projected light (1) is adjusted by combining the first dimming control and the second dimming control, one of the first dimming control or the second dimming control controls a direction of decreasing the brightness of the projected light (1) before the other of the first dimming control or the second dimming control controls a direction of increasing the brightness of the projected light (1).

2. The projector according to claim 1, wherein
the first dimming control is a light generator (24) that adjusts light intensity of the projected light (1),
the second dimming control is a neutral density filter (28) that adjusts an amount of transmitted light of the projected light (1), and
when the brightness of the projected light (1) is adjusted by combining the light generator (24) and the neutral density filter (28), the light generator (24) decreases the light intensity of the projected light (1) before the neutral density filter (28) increases the amount of transmitted light, or the neutral density filter (28) decreases the amount of transmitted light of the projected light (1) before the light generator (24) increases the light intensity of the projected light (1).

3. The projector according to claim 2, wherein, when the brightness of the projected light (1) is changed from a first state to a second state that is darker than the first state by combining the light generator (24) and the neutral density filter (28), the neutral density filter (28) decreases the amount of transmitted light before the light generator (24) increases the light intensity of the projected light (1).

4. The projector according to claim 2 or 3, wherein, when the brightness of the projected light (1) is changed from a first state to a third state that is brighter than the first state by combining the light generator (24) and the neutral density filter (28), the light generator (24) decreases the light intensity of the projected light (1) before the neutral density filter (28) increases the amount of transmitted light.

5. The projector according to any one of claims 2 through 4, wherein
the neutral density filter (28) comprises a plurality of filters (28a, 28b) and adjusts the amount of transmitted light by changing a combination of the plurality of filters (28a, 28b) for decreasing the amount of transmitted light, and
when the neutral density filter (18) decreases the amount of transmitted light before the light generator (24) increases the light intensity of the projected light (1), the light generator (24) increases the light intensity of the projected light (1) after the neutral density filter (28) decreases the amount of transmitted light by changing the combination of the plurality of filters (28a, 28b).

6. The projector according to claim 5, wherein
the light generator (24) adjusts the light intensity of the projected light (1) emitted from the light generator (24) by electrically changing power,
the neutral density filter (28) adjusts the amount of transmitted light by mechanically moving each of the plurality of filters (28a, 28b) individually in a direction that traverses the light path (L1) of the projected light (1), and
when the neutral density filter (28) decreases the amount of transmitted light before the light generator (24) increases the light intensity of the projected light (1), the light generator (24) increases light intensity of the projected light (1) by electrically changing the power of the light generator (24) after the neutral density filter (28) completes mechanically moving the plurality of filters (28a, 28b).

7. The projector according to any one of claims 1 through 6, wherein, when the brightness of the projected light (1) is adjusted by combining the first dimming control and the second dimming control, in a case where the direction of increasing or the direction of decreasing the brightness of the projected light (1) of the first dimming control is the same as the direction of increasing or the direction of decreasing the brightness of the projected light (1) of the second dimming control, the first dimming control adjusts the brightness of the projected light (1) at the same time that the second dimming control adjusts the brightness of the projected light (1).

8. The projector according to any one of claims 1-7, wherein the projector is a head-up display (100; 300).

9. A light dimming control method comprising:
adjusting brightness of a projected light (1) using a first dimming control;
adjusting the brightness of the projected light (1) separately from the first dimming control using a second dimming control;
combining the first dimming control and the second dimming control to adjust the brightness of the projected light (1); and
controlling, using one of the first dimming control or the second dimming, a direction of decreasing the brightness of the projected light (1) before controlling, using the other of the first dimming control or the second dimming control, a direction of increasing the brightness of the projected light (1).

10. The method according to claim 9, wherein
the first dimming control is a light generator (24) that adjusts light intensity of the projected light (1), and
the second dimming control is a neutral density filter (28) that adjusts an amount of transmitted light of the projected light (1), and
wherein, when the brightness of the projected light (1) is adjusted by combining the light generator (24) and the neutral density filter (28), the light generator (24) decreases the light intensity of the projected light (1) before the neutral density filter (28) increases the amount of transmitted light, or the neutral density filter (28) decreases the amount of transmitted light of the projected light (1) before the light generator (24) increases the light intensity of the projected light (1).

11. The method according to claim 10, wherein, when the brightness of the projected light (1) is changed from a first state to a second state that is darker than the first state by combining the light generator (24) and the neutral density filter (28), the neutral density filter (28) decreases the amount of transmitted light before the light generator (24) increases the light intensity of the projected light (1).

12. The method according to claim 10, wherein, when the brightness of the projected light (1) is changed from a first state to a third state that is brighter than the first state by combining the light generator (24) and the neutral density filter (28), the light generator (24) decreases the light intensity of the projected light (1) before the neutral density filter (28) increases the amount of transmitted light.

13. The method according to anyone of claims 10-12, wherein
the neutral density filter (28) comprises a plurality of filters (28a, 28b) and adjusts the amount of transmitted light by changing a combination of the plurality of filters (28a, 28b) for decreasing the amount of transmitted light, and
when the neutral density filter (28) decreases the amount of transmitted light before the light generator (24) increases the light intensity of the projected light (1), the light generator (24) increases the light intensity of the projected light (1) after the neutral density filter (28) decreases the amount of transmitted light by changing the combination of the plurality of filters (28a, 28b).

14. The method according to claim 13, wherein
the light generator (24) adjusts the light intensity of the projected light (1) emitted from the light generator (24) by electrically changing power,
the neutral density filter (28) adjusts the amount of transmitted light by mechanically moving each of the plurality of filters (28a, 28b) individually in a direction that traverses the light path (L1) of the projected light (1), and
when the neutral density filter (28) decreases the amount of transmitted light before the light generator (24) increases the light intensity of the projected light (1), the light generator (24) increases light intensity of the projected light (1) by electrically changing the power of the light generator (24) after the neutral density filter (28) completes mechanically moving the plurality of filters (28a, 28b).

15. The method according to claim 10, wherein, when the brightness of the projected light (1) is adjusted by combining the first dimming control and the second dimming control, in a case where the direction of increasing or the direction of decreasing the brightness of the projected light (1) of the first dimming control is the same as the direction of increasing or the direction of decreasing the brightness of the projected light (1) of the second dimming control, the first dimming control adjusts the brightness of the projected light (1) at the same time that the second dimming control adjusts the brightness of the projected light (1).
